# EUROPEAN PATENT APPLICATION

(11) **EP 4 513 886 A1**
(43) Date of publication of application: **26.02.2025**
(21) Application number: 24736638.8
(22) Date of filing: 24.05.2024
(51) Int. Cl.: H04N 23/667, G06F 3/01

(54) **METHOD AND APPARATUS FOR EYE MOVEMENT TRACKING, AND DEVICE AND STORAGE MEDIUM**

(30) Priority: 04.07.2023 CN 202310818768
(71) Applicant: Lemon Inc., Grand Cayman, KY1-1205 (KY); Beijing Zitiao Network Technology Co., Ltd., Beijing 100190 (CN)
(72) Inventor: ZHANG, Bowei, California 90066 (US); LIU, Runyu, California 90066 (US); LI, Xiaokai, Chaoyang District Beijing 100028 (CN)
(74) Representative: Dentons UK and Middle East LLP
(86) International application number: PCT/CN2024/095351
(87) International publication number: WO 2025/007676

(57) **Abstract**

According to embodiments of the disclosure, a method and an apparatus for eye tracking are provided. The method comprises capturing a first image of an eye by a first camera; capturing a second image of the eye by a second camera; determining, based on information of an eye component in the first image and/or the second image, one of the first camera and the second camera as a main camera and the other one as an auxiliary camera; and controlling the main camera to operate at a power higher than that of the auxiliary camera. Therefore, the power consumption during the eye tracking may be reduced by switching between the main camera and the auxiliary camera.

## Description

### CROSS REFERENCE

The present application claims priority to Chinese Patent Application No. 2023108187689 filed on July 4, 2023 and entitled "METHOD, APPARATUS, DEVICE AND STORAGE MEDIUM FOR EYE TRACKING", which is incorporated herein by reference in its entirety.

### FIELD

The example embodiments of the present disclosure generally relate to the field of computers, and in particular, to a method, an apparatus, a device and a computer-readable storage medium for eye tracking.

### BACKGROUND

The eye tracking technology may track a gaze direction of a human eye. The eye tracking technology has a wide range of application fields, which, for example, is able to be applied in the field of extended reality (XR) such as virtual reality (VR), augmented reality (AR), and mix reality (MR) and the like. By using the eye tracking technology, various content may be displayed to users more efficiently.

### SUMMARY

In the first aspect of this disclosure, a method for eye tracking is provided. The method comprises: capturing a first image of an eye by a first camera; capturing a second image of the eye by a second camera; determining, based on information of an eye component in at least one of the first image and the second image, one of the first camera and the second camera as a main camera and the other one as an auxiliary camera; and controlling the main camera to operate at a power higher than that of the auxiliary camera.

In the second aspect of this disclosure, an apparatus for eye tracking is provided. The apparatus comprises: a first image capture module configured to capture a first image of an eye by a first camera; a second image capture module configured to capture a second image of the eye by a second camera; a switch module configured to determine, based on information of an eye component in at least one of the first image and the second image, one of the first camera and the second camera as the main camera and the other one as the auxiliary camera; and a control module configured to control the main camera to operate at a power higher than that of the auxiliary camera.

In the third aspect of this disclosure, an electronic device is provided. The device comprising at least one processing unit; and at least one memory, the at least one memory being coupled to the at least one processing unit and storing instructions for executed by the at least one processing unit. The instruction, when executed by the at least one processing unit, causing the device to perform the first method.

In the fourth aspect of this disclosure, a computer-readable storage medium is provided. The computer-readable storage medium having a computer program stored thereon, the computer program can be executed by a processor to implement the first method.

It would be appreciated that the content described in the section is neither intended to identify the key features or essential features of the present disclosure, nor is it intended to limit the scope of the present disclosure. Other features of the present disclosure will be readily understood through the following description.

### BRIEF DESCRIPTION OF THE DRAWINGS

The above and other features, advantages, and aspects of the various embodiments of the present disclosure will become more apparent in combination with the accompanying drawings and with reference to the following detailed description. In the drawings, the same or similar reference symbols refer to the same or similar elements, wherein:
FIG. 1 illustrates a schematic diagram of an example environment capable of implementing embodiments of the present disclosure;
FIG. 2 illustrates a schematic diagram of an electronic device with eye tracking function capable of implementing embodiments of the present disclosure;
FIG. 3A illustrates a flowchart of a process for eye tracking according to some embodiments of the present disclosure;
FIG. 3B illustrates a schematic diagram of a dynamic switching process of a main camera and an auxiliary camera according to some embodiments of the present disclosure;
FIG. 4A illustrates a schematic diagram of a main camera outputting an image in a first mode according to some embodiments of the present disclosure;
FIG. 4B illustrates a schematic diagram of an auxiliary camera outputting an image in a second mode according to some embodiments of the present disclosure;
FIG. 5 illustrates a block diagram of an apparatus for eye tracking according to some embodiments of the present disclosure; and
FIG. 6 illustrates a block diagram of a device capable of implementing a plurality of embodiments of the present disclosure.

### DETAILED DESCRIPTION

The embodiments of the present disclosure will be described in more detail below with reference to the accompanying drawings. Although certain embodiments of the present disclosure are shown in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the accompanying drawings and embodiments of the present disclosure are only for the purpose of illustration and are not intended to limit the scope of protection of the present disclosure.

In the description of the embodiments of the present disclosure, the term "comprising", and similar terms would be appreciated as open inclusion, that is, "comprising but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be included below. The terms "first", "second", and/or the like may refer to different or same objects. Other explicit and implicit definitions may also be included below.

It will be appreciated that the data involved in this technical solution (comprising but not limited to the data itself, data acquisition or use) shall comply with the requirements of corresponding laws, regulations, and relevant provisions.

It will be appreciated that before using the technical solution disclosed in each embodiment of the present disclosure, users should be informed of the type, the scope of use, the use scenario, etc. of the personal information involved in the present disclosure in an appropriate manner and authorized in accordance with relevant laws and regulations.

For example, in response to receiving an active request from a user, a prompt message is sent to the user to explicitly prompt the user that the operation requested operation by the user will need to obtain and use the user's personal information, so that users may select whether to provide personal information to the software or the hardware such as an electronic device, an application, a server or a storage medium that perform the operation of the technical solution of the present disclosure according to the prompt information.

As an optional but non-restrictive implementation, in response to receiving the user's active request, the method of sending prompt information to the user may be, for example, a pop-up window in which prompt information may be presented in text. In addition, the pop-up windows may also contain selection controls for users to choose "agree" or "disagree" to provide personal information to electronic devices.

It will be appreciated that the above notification and acquisition of user authorization process are only schematic and do not limit the implementations of the present disclosure. Other methods that meet relevant laws and regulations may also be applied to the implementation of the present disclosure.

As briefly mentioned in the previous section, XR has been widely studied and applied. XR provides users with a unique sensory experience, by using a combination of a hardware device and a plurality of technical means to integrate virtual content and real scenes. The eye tracking technology may be applied in the field of XR. For example, electronic devices with the eye tracking function may track a gaze point of the human eye. However, in the process of using the electronic devices with the eye tracking function to track the gaze point, there may be a large amount of data processing, resulting in high power consumption.

Embodiments of the present disclosure proposes a solution for eye tracking. According to various embodiments of the present disclosure, a first camera and a second camera installed on the electronic devices with an eye tracking function capture the first image and the second image of an eye, respectively. Furthermore, based on information of an eye component in the first image and the second image (for example the position and/or the size of a pupil in the first image and the second image), one of the first camera and the second camera is determined as a main camera and the other one as an auxiliary camera, and the main camera is controlled to operate at a power higher than that of the auxiliary camera. In the embodiments of the present disclosure, the main camera and the auxiliary camera may be dynamically switched based on the captured images. In this way, cameras that are more suitable for eye tracking may be operated at a higher power, thereby reducing power consumption without affecting eye tracking.

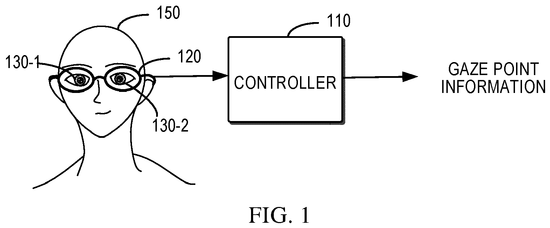

The embodiments of the present disclosure are described below in conjunction with the accompanying drawings. FIG. 1 illustrates a schematic diagram of an example environment 100 capable of implementing embodiments of the present disclosure. In the example environment 100, user 150 wears an electronic device 120 with an eye tracking function. The electronic device 120 may capture images of eyes 130-1 and 130-2 (collectively referred to as eyes 130) of a user 150.

A controller 110 processes the images captured by the electronic device 120 to output gaze point information. In some embodiments, the controller 110 may be a separate device capable of communicating with the electronic device 120, for example a server, a computing node, and/or the like, for image or data processing.

In some embodiments, the controller 110 may be integrated with the electronic device 120 or at least coupled with the electronic device 120. For example, the controller 110 may be a module of the electronic device 120 or implemented by a processing unit in the electronic device 120.

It would be appreciated that the structure and function of the environment 100 are described for the purposes of illustration only, without implying any limitation on the scope of the present disclosure.

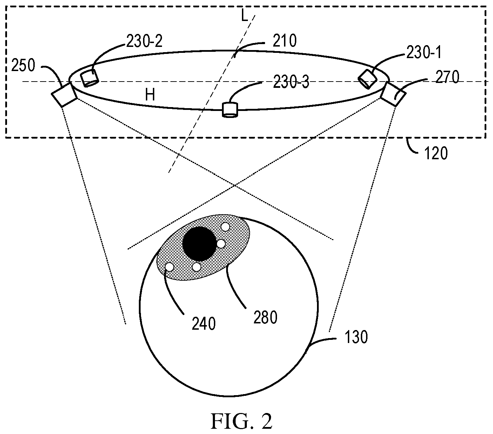

FIG. 2 illustrates a schematic diagram of an electronic device with an eye tracking function capable of implementing embodiments of the present disclosure. Referring to FIG. 2, the electronic device may include a lens 210. The lens 210 is located in front of an eye 130. The electronic devices, for example, may be a helmet, glasses or other suitable wearable or portable devices used for VR, AR, and XR. In some scenarios, for example, when the electronic devices are applied at a wearable display device, the electronic devices may include paired lenses 210 for a left eye and a right eye, respectively. It would be appreciated that in some other scenarios, for example analyzing user behaviors based on eye tracking, the lens 210 may also be set in a single piece of lens.

In the embodiments of the present disclosure, the lens 210 may be implemented as a foldable optical path lens or lens group, which may also be referred to as a pancake lens in the context of this disclosure. It would be appreciated that any element with the same or similar structure and optical properties that may refract the optical path may also be used in the electronic device 120 of the present disclosure. The lens 210 may be a foldable optical path using a semitransparent and semi-reflective polarizer lens system, where light is refracted multiple times between the lens, phase retarder, and reflective polarizer, and finally enters the human eye from the reflective polarizer. The lens 210 may also be other types of lenses, and no limitations in this regard are suggested in this disclosure.

There are a plurality of light sources 230-1, 230-2, and 230-3 arranged around the lens 210, which are also collectively or individually referred to as light source(s) 230. The light source 230 is configured to illuminate the user's eyes, for example illuminating an area adjacent to a pupil 280 to generate a flicker 240.

In some embodiments, as shown in FIG. 2, the plurality of light sources 230 are arranged around the edges of the lens 210. In other embodiments, the plurality of light sources 120 are arranged in the middle part of the lens 210. Alternatively, or in addition, the plurality of light sources 120 may be embedded in the lens 210. The number and layout of the light sources 230 shown in FIG. 2 are only examples. The number and layout of the light sources 230 may also be any suitable number and layout. The number and layout position of the light sources 230 are not limited in this disclosure.

In the embodiments of the present disclosure, the light source 230 may be implemented as a light-emitting diode (LED). Alternatively, or in addition, the plurality of light sources 230 may be implemented as vertical cavity surface emitting lasers (VCSEL). It would be appreciated that the scope of this disclosure is not limited to this. Other light-emitting elements with a suitable size, a structure, and a feature may be constructed as the plurality of light sources in the electronic device 120 of the present disclosure. Alternatively, or in addition, due to different optical characteristics (such as a field of view angles) of the plurality of light sources 230 (e.g. the light sources 230-1, 230-2, 230-3), an optical adjustment component may be added before the light sources 230 (e.g. the light sources 230-1, 230-2 and 230-3) to adjust the optical characteristics of the light sources 230 to be consistent.

The electronic device 120 may also include a first camera 250 and a second camera 270, configured to capture images of the user's eyes (e.g., the eye 130). For example, the first camera 250 and the second camera 270 may be eye tracking (ET) cameras. The first camera 250 and the second camera 270 may be located in any suitable position.

In some embodiments, the first camera 250 and the second camera 270 may be set along a horizontal axis H of the lens 210 adjacent to an end of the lens 210. When the user wears the electronic device 120, a direction of the horizontal axis H is essentially consistent with a direction of a line connecting the user's two eyes. In the case where the lens 210 is a common ellipse, the horizontal axis H may usually be a long axis of the ellipse.

As an example, the first camera 250 and the second camera 270 are arranged along the horizontal axis H of the lens 210 at both proximal and distal ends of each lens 210. The proximal camera will be positioned adjacent to the user's nose bridge, for example between the nose bridge and the inner corner of the user's eye. Due to the capturing angles for the eye images in the nose and temporal regions are relatively wide, in such embodiments, by placing the camera in such a position, higher quality eye images may be better captured, thereby improving the accuracy of eye position determination and eye tracking. And another camera may be located adjacent to the user's temporal area (i.e., the temple). Another image of the eye is captured from that location. In the example of FIG. 2, assuming that the eye 130 is the user's right eye, the first camera 250 is located adjacent to the user's nose bridge, and the second camera 270 is located adjacent to the user's temporal area.

Of course, this arrangement is not necessary. In some other embodiments, the paired cameras may also be set along the vertical axis L of the lens 210, adjacent to the end of the lens 210. For example, the vertical axis L is essentially vertical to the horizontal axis H.

It would be appreciated that the first camera 250 and the second camera 270 of the present disclosure are not limited to be deployed shown in the embodiments of FIG. 2. Any suitable modifications or adjustments may be made to the positions and/or numbers of the first camera and the second camera without departing from the principles of the present disclosure.

Considering that the gaze point of the user (for example the point in the gaze direction of the eye 130) is dynamically changing, it is necessary to capture the real-time position of the gaze point. The controller 110 may determine the gaze point information of the user, for example a gaze point position, based on a position of the flicker 240 and a position of the pupil 280.

It would be appreciated that the electronic device described above with reference to FIG. 2 is only an example and does not suggest any limitation on the function and scope of the embodiments described herein.

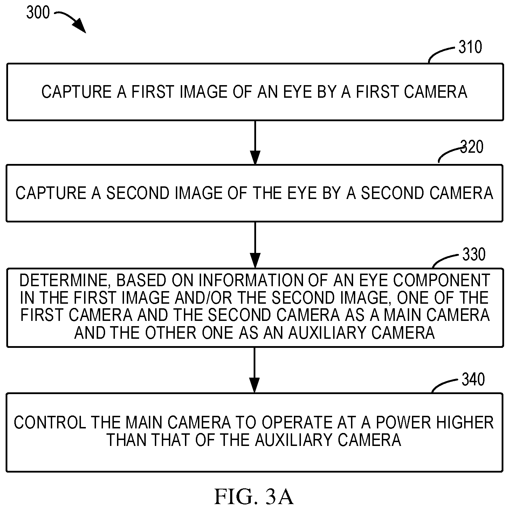

FIG. 3A illustrates a flowchart of a process 300 for eye tracking according to some embodiments of the present disclosure. The process 300 may be implemented at the controller 110. Only for the purpose of illustration, the process 300 will be described below with reference to FIGS. 1 and 2.

At block 310, a first image of an eye is captured by the first camera 250. At block 320, a second image of the eye is captured by the second camera 270. Referring to the example in FIG. 2, the light source 230 illuminates the eye 130, and after reflection by a cornea of the eye 130, the eye 130 is imaged in the first camera 250 and the second camera 270. Correspondingly, the first camera 250 and the second camera 270 output the first image and the second image of the user's eye, respectively. For example, the first image of a right eye may be captured by the first camera 250, and the second image of the right eye may be captured by the second camera 270.

At block 330, based on information of an eye component in the first image and/or the second image, one of the first camera 250 and the second camera 270 is determined as a main camera, and the other one is determined as an auxiliary camera. The eye component may include any suitable part of the eye, for example a pupil, an iris, a combination of pupils and iris, etc. For example, based on the first image and the second image of the user's eye, the controller 110 may determine the information of the pupil, and thus the main camera and the auxiliary camera may be determined based on the information of the pupil.

In some embodiments, the information of the eye component described herein may include a position and/or a size of the eye component in the image. Correspondingly, the controller 110 may determine, based on the position and/or the size of the pupil in the first image and the second image, one of the first camera 250 and the second camera 270 as the main camera and the other one as the auxiliary camera.

Due to the different layouts of the positions along the lens between the first camera 250 and the second camera 270, the positions and the sizes of the eye component in the images captured by the first camera 250 and the second camera 270 may be different. Considering the dynamic changes in a gaze direction of the human eyes, the positions and the sizes of the eye component in the images captured by the first camera 250 and the second camera 270 may also be different at different moments and scenes.

For the purpose of discussion, in the following embodiments, the switching between the main camera and the auxiliary camera is mainly described using the pupil as an example of the eye component, but it would be appreciated that this may be applied similarly at other eye component. In some embodiments, if it is determined that the position of the pupil in the first image is closer to a predetermined position than the position of that in the second image, the controller 110 determines the first camera 250 as the main camera and the second camera 270 as the auxiliary camera. For example, the predetermined position may be in the center of the image. In this case, the position of the pupil in the first image is located in the center of the first image, while the position of the pupil in the second image is far from the center of the second image, for example adjacent to the edge of the image. In such embodiments, the position of the pupil in the image may be represented by the position of the pupil center in the image.

In some embodiments, if it is determined that the area occupied by the pupil in the first image is greater than the area occupied by the pupil in the second image, the first camera may be determined as the main camera. For example, the area occupied by the pupil in the first image is larger than the predetermined area range, while the area occupied by the pupil in the second image is smaller than the predetermined area range.

In some embodiments, if the pupil is not detected in the image captured by one camera or if the pupil is close to the edge of the image, the camera may be determined as the auxiliary camera and the other camera may be determined as the main camera. For example, during the process of dynamic switching, the image output by the current auxiliary camera is used to monitor an eye position. If the pupil is not detected in the image output by the current auxiliary camera or the pupil is close to the edge of the image, the pupil may be located in the image captured by the current main camera. In this case, the controller 110 may determine to continue maintaining the configuration of the current main camera and the auxiliary camera.

In some embodiments, if the pupil in the image captured by one camera is incomplete, while the pupil in the image captured by another camera is complete, then the camera may be determined as an auxiliary camera and the other camera may be determined as the main camera.

In an initial state when the electronic device 120 starts up, the controller 110 does not obtain images captured by two cameras, and therefore the main camera and the auxiliary camera may not be determined based on the images. When the electronic device 120 starts, the user is likely to look directly at the display screen. In view of this, in some embodiments, in the initial state, the main camera may be set by default to the camera located near the nose, and the auxiliary camera may be set by default to the camera located near the temporal area. As the gaze direction of the human eyes changes, the controller 110 determines, based on the first image captured by the first camera and the second image captured by the second camera, the main camera and the auxiliary camera, enabling dynamic switching between the main camera and the auxiliary camera.

Still with reference to FIG. 3A, at block 340, the controller 110 controls the main camera to operate at a power higher than that of the auxiliary camera. For example, after determining the main camera and the auxiliary camera, the controller 110 may send configuration information to the first camera 250 and the second camera 270. The first camera 250 and the second camera 270 operate respectively according to the configuration information. During use, the user's eyeballs are dynamically changing, and therefore the main and auxiliary of the two cameras are also dynamically changing. The controller 110 may control the dynamic switching between the main camera and the auxiliary camera. After each switch determines the main camera and the auxiliary camera, the main camera is controlled to operate at a power higher than that of the auxiliary camera. This may reduce power consumption.

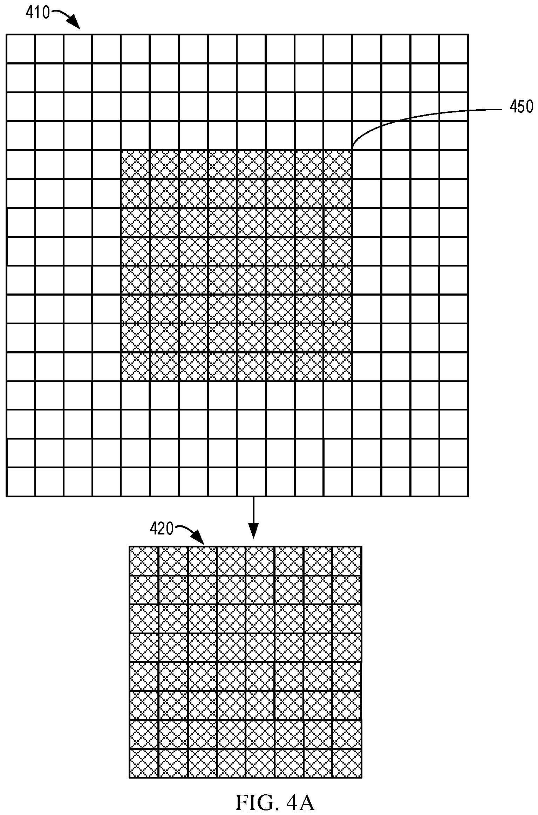

The operating modes of the main camera and the auxiliary camera may be distinguished in various suitable ways. In some embodiments, the main camera outputs an image in the first mode, in which the size of the image output by the main camera is changed. In other words, compared to the initial captured image by the main camera, the size of the output image changes. Specifically, the controller 110 may send the configuration information about the first mode (also called a clipping mode) to the main camera. This configuration information may indicate the region of interest (ROI) in the image. According to this configuration information, the main camera may crop the captured original image based on ROI and output the cropped image. The cropped image at least includes a ROI, and the size of the cropped image is changed relative to the original image. An example will be described with reference to FIG. 4A. FIG. 4A presents a pre-cropped image 410, which includes arrays of pixels in rows and columns. It would be appreciated that the number and arrangement of pixels shown in FIG. 4A are only an example and should not suggest any limitation on the function and scope of the embodiments described herein. In the embodiments of the present disclosure, there may be any suitable number and arrangement of pixels arranged in any suitable mode.

In the example of FIG. 4A, ROI 450 is shown. In some embodiments, the ROI 450 may be predetermined, for example located in a central area of an image. In some embodiments, the image area covered by ROI 450 may be dynamically changing. For example, the controller 110 may determine the coverage range of ROI 450 in the image based on various suitable factors, such factors may include, for example, a position and/or a size of the pupil, a position and/or a size of the iris. As an example, the area occupied by the pupil and the iris in the image may be used as ROI. The information about ROI may be included in the configuration information sent by the controller 110 to the main camera. Correspondingly, the main camera crops the captured original image based on the configuration information, thereby outputting the cropped image 420. In this example, image 420 only includes ROI 450.

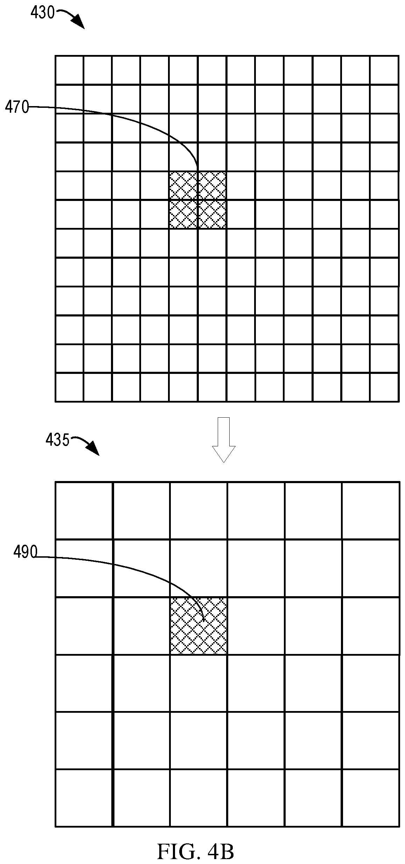

In some embodiments, the position of the ROI in the image may dynamically change with each switch between the main camera and the auxiliary camera. In the example of FIG. 4, the ROI 450 may also be located at different positions in an image 410.

In some embodiments, ROI may also be determined by both the images of the auxiliary camera and the main camera. For this purpose, the controller 110 may determine the region of interest in the image captured by the main camera based on calibration information. The calibration information indicates the transformation relationship between the image coordinates of the auxiliary camera and the image coordinates of the main camera. For example, in the case where the position and/or the size of the pupil is also shown in the image of the auxiliary camera, the controller 110 may convert the position and/or the size of the pupil in the image of the auxiliary camera to the position and/or the size of the pupil in the main camera image based on the calibration information. Further based on the position and/or the size of the converted pupil, the position of ROI in the image captured by the main camera is determined.

In this way, in a first mode, the size of the image output by the main camera is reduced, which may reduce power consumption.

The operating mode of the main camera has been described above. In contrast, the auxiliary camera outputs an image in a second mode. In the second mode, the number of pixels of the image output by the auxiliary camera is reduced. In other words, compared to the captured original image, the pixels of the image output by the auxiliary camera are reduced, thereby reducing power consumption.

Specifically, the controller 110 may send the configuration information about the second mode (also referred to as the merge mode) to the auxiliary camera. This configuration information may indicate how to merge adjacent pixels in the image, thereby reducing the number of pixels in the output image. Based on this configuration information, the auxiliary camera may merge a certain number of adjacent pixels in the original image and output the merged image.

An example will be described with reference to FIG. 4B. FIG. 4B presents an image 430, which is an example of an original image captured by the auxiliary camera. The image 430 includes arrays of pixels in rows and columns. It would be appreciated that the number and arrangement of pixels shown in FIG. 4B are only an example and should not suggest any limitation on the function and scope of the embodiments described herein. In the embodiments of the present disclosure, there may be any suitable number and arrangement of pixels in any suitable mode. In the second mode, the auxiliary camera processes the captured image 430 as an output image 435.

As an example, the auxiliary camera merges a plurality of adjacent pixels into a single pixel output. In FIG. 4B, the auxiliary camera is shown to merge four adjacent pixels 470 into a single pixel 490 as an output. For example, the auxiliary camera may use the average pixel value of four adjacent pixels as the merged pixel value for pixel merging. Similarly, the auxiliary camera merges other adjacent pixels in the image 430 to output a low pixel image 435. It would be appreciated that the output approach of reducing pixels shown in FIG. 4B is only an example, and no limitation in this regard is suggested in this disclosure. For example, six adjacent pixels, eight adjacent pixels and/or the like may also be merged into a single pixel as an output.

In this way, the number of pixels of the image output by the auxiliary camera is reduced, thereby effectively reducing power consumption. In addition, although the pixels of the image output by the auxiliary camera are reduced, the original field of view is maintained. Therefore, the images output by the auxiliary camera may be used to monitor an eye position for switching between the main camera and the auxiliary camera.

a cropping mode for the main camera and a merging mode for the auxiliary camera have been described with reference to FIGS. 4A and 4B. It would be appreciated that in such embodiments, the first image and the second image described above may be cropped or merged images output by the camera. However, it would be appreciated that the cropping mode and the merging mode are only examples, and in the embodiments of the present disclosure, the operating modes of the main camera and the auxiliary camera may be distinguished in any suitable way. Alternatively, in some embodiments, both the main camera and the auxiliary camera may operate in the merging mode, but compared to the main camera, more adjacent pixels are merged in the auxiliary camera.

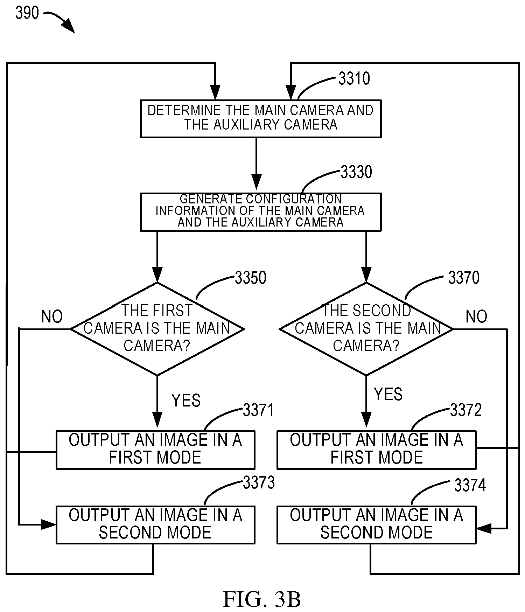

The dynamic switching process 390 of the first camera and the second camera as the main camera and the auxiliary camera, respectively, will be described below with reference to FIG. 3B. At block 3310, the main camera and the auxiliary camera are determined. For example, the controller 110 determines the main camera and the auxiliary camera as described with reference to block 330.

After the main camera and the auxiliary camera is determined, the configuration information for the main camera and the auxiliary camera is generated at block 3330. This configuration information may be sent to the main camera and the auxiliary camera. This configuration information may indicate whether the first camera is the main camera or the auxiliary camera, and indicate whether the second camera is the main camera or the auxiliary camera. For example, the configuration information sent to the main camera may be the configuration information about the first mode mentioned above, and the configuration information sent to the auxiliary camera may be the configuration information about the second mode mentioned above.

At block 3350, it is determined whether the first camera is the main camera. The first camera 250 may determine whether it is the main camera based on the received configuration information. For example, if the received configuration information indicates the first mode, the first camera may be determined as the main camera, and if the received configuration information indicates the second mode, the first camera may be determined as the auxiliary camera. If the first camera is the main camera, the process 390 proceeds to block 3371 where the first camera outputs an image in the first mode as the main camera. If the first camera is an auxiliary camera, the process 390 proceeds to block 3373 where the first camera outputs an image in the second mode as an auxiliary camera.

Similarly, at block 3370, it is determined whether the second camera is the main camera. The second camera 270 may determine whether it is the main camera based on the received configuration information. For example, if the received configuration information indicates the first mode, the second camera may be determined as the main camera, and if the received configuration information indicates the second mode, the second camera may be determined as the auxiliary camera. If the second camera is the main camera, the process 390 proceeds to block 3372 where the second camera 270 outputs an image in the first mode as the main camera. If the second camera is an auxiliary camera, the process 390 proceeds to block 3374 where the second camera outputs an image in the second mode as an auxiliary camera. It would be appreciated that block 3371 and block 3372 will not occur simultaneously, and block 3373 and block 3374 will not occur simultaneously.

The process 390 returns to block 3310, where the main camera and the auxiliary camera at the next time are determined according to the image output in the first mode and the image output in the second mode. That is, the controller 110 uses the image output in the first mode and the image output in the second mode for the next determination of the main camera and the auxiliary camera.

The switching between the main camera and the auxiliary camera has been described above. Now, the processing of the images output from the main camera and the auxiliary camera will be described.

In some embodiments, the image output by the main camera and the image output by the auxiliary camera may be processed separately. For example, an eye tracking algorithm may be applied to the image output by the main camera to determine gaze point information. The image output by the auxiliary camera may be used to monitor eye movement, in order to switch between the main camera and the auxiliary camera.

In some embodiments, the image output by the main camera and the image output by the auxiliary camera may be used in combination. The controller 110 combines the image output by the main camera and the image output by the auxiliary camera, and uses the combined images to track the eye and obtain the gaze point information.

The controller 110 may perform feature extraction on the image output by the main camera (e.g. cropped images) and the image output by the auxiliary camera (e.g. merged images). Furthermore, the controller 110 calculates a gaze angle and a position of the pupil (e.g., the center position of the pupil) based on the extracted features. Then, the controller 110 determines the gaze point information, for example the gaze point position, based on the gaze angle and the position of the pupil. Any suitable ET algorithm may be used in the above process of determining the gaze point information, and the scope of the present disclosure is not limited in this regard.

In the embodiments of the present disclosure, the controller 110 or a portion thereof (e.g., a module for controlling the main camera and the auxiliary camera) may be integrated into the first camera and/or the second camera, or at least coupled with the first camera and/or the second camera to obtain the first image and the second image captured by the first camera and the second camera. For example, the controller 110 or a portion thereof (for example a module for controlling the main camera and the auxiliary camera) may be implemented as a customized processing chip integrated with a camera sensor. In this way, it is possible to save data transmission delay from the first camera and/or the second camera to the controller 110. Alternatively, the controller 110 may be implemented as a separate computing unit or on the same computing unit as an eye tracking algorithm.

In the embodiments of the present disclosure, the dynamic switching between the main camera and the auxiliary camera may effectively reduce power consumption. At the same time, it also ensures the accuracy of the gaze angle tracking and the accuracy of the pupil center position.

In addition, the user calibration process further may be simplified according to the embodiments of the present disclosure. Specifically, due to different characteristics of eyes of individual users has, after the user wears the electronic device 120, it is necessary to calibrate their line of sight to enable the user to view a display screen clearer. In this dual-camera electronic device, only a small number (e.g., one) of calibration points need to be displayed on the display screen. By obtaining the gaze point position when the user views the calibration point, a difference between the optical and visual axes of the user may be determined, and then calibration may be performed according to the difference between the optical and visual axes of the user. As a result, a better and more simplified calibration process may be achieved.

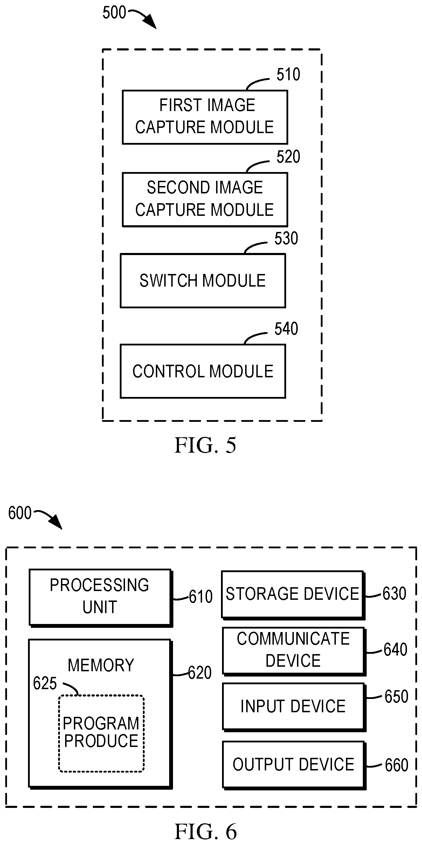

FIG. 5 illustrates a schematic structural diagram of an apparatus 500 for eye tracking according to certain embodiments of the present disclosure. The apparatus 500 can be implemented or included in the electronic device 120, for example in the controller 110. Various modules/components in the apparatus 500 can be implemented by a hardware, a software, a firmware, or any combination of them.

As shown in the drawing, the apparatus 500 includes a first image capture module 510 configured to capture a first image of an eye by a first camera. The apparatus 500 also includes a second image capture module 520, which captures a second image of the eye by a second camera. The apparatus 500 also includes a switch module 530 configured to determine, based on information of an eye component in at least one of the first camera and the second image, one of the first camera and the second camera as the main camera and the other one as the auxiliary camera. The apparatus 500 also includes a control module 540 configured to control the main camera to operate at a power higher than that of the auxiliary camera.

In some embodiments, the control module 540 is also configured to determine that the main camera outputs an image in a first mode, in the first mode, a size of the image output by the main camera is changed; determine that the auxiliary camera outputs an image in a second mode, in the second mode, a number of pixels of the image output by the auxiliary camera is reduced.

In some embodiments, the switch module 530 is also configured to determine the main camera based on positions and/or sizes of the eye component in the first image and the second image.

In some embodiments, the switch module 530 is also configured to: in response to determining that a position of the eye component in the first image is closer to a predetermined position than a position of the eye component in the second image, determining the first camera as the main camera; and/or in response to determining that an area occupied by the eye component in the first image is greater than an area occupied by a pupil in the second image, determining the first camera as the main camera.

In some embodiments, the image output by the main camera is obtained by cropping an image captured by the main camera based on an area of interest.

In some embodiments, the apparatus 500 also includes a calibration module configured to determine, based on calibration information, the area of interest in the image captured by the main camera, the calibration information indicating a transformation relationship between an image coordinate of the auxiliary camera and an image coordinate of the main camera

In some embodiments, the apparatus 500 further includes a gaze point information output module configured to combine the images output by the main camera and the auxiliary camera; and track the eye by using the combined images to obtain the gaze point information.

FIG. 6 illustrates a block diagram of an example electronic device 600 in which one or more embodiments of the present disclosure may be implemented. It would be appreciated that the computing device 600 shown in FIG. 6 is only an example and should not constitute any restriction on the function and scope of the embodiments described herein. The computing device 600 shown in FIG. 6 may be used to implement the controller 110 of FIG. 1.

As shown in FIG. 6, the computing device 600 is in the form of a general computing device. The components of the computing device 600 may comprise, but are not limited to, one or more processors or processing units 610, a memory 620, a storage device 630, one or more communication units 640, one or more input devices 650, and one or more output devices 660. The processing units 610 may be actual or virtual processors and can execute various processes according to the programs stored in the memory 620. In a multiprocessor system, multiple processing units execute computer executable instructions in parallel to improve the parallel processing capability of the computing device 600.

The computing device 600 typically comprises a variety of computer storage media. Such media can be any available media that is accessible to the computing device 600, comprising but not limited to volatile and non-volatile media, removable and non-removable media. The memory 620 can be volatile memory (such as registers, caches, random access memory (RAM)), nonvolatile memory (such as a read-only memory (ROM), an electrically erasable programmable read-only memory (EEPROM), a flash memory), or some combination thereof. The storage device 630 can be any removable or non-removable medium, and can comprise machine-readable medium, such as a flash drive, a disk, or any other medium which can be used to store information and/or data (for example training data for training) and can be accessed within the computing device 600.

The computing device 600 may further comprise additional removable/non-removable, volatile/non-volatile storage medium. Although not shown in FIG. 6, a disk driver for reading from or writing to a removable, non-volatile disk (such as a "floppy disk"), and an optical disk driver for reading from or writing to a removable, non-volatile optical disk can be provided. In these cases, each driver may be connected to the bus (not shown) by one or more data medium interfaces. The memory 620 can comprise a computer program product 625, which comprises one or more program modules configured to execute various methods or actions of the various embodiments disclosed herein.

The communication unit 640 implements communication with other computing devices via a communication medium. In addition, functions of components in the computing device 600 may be implemented by a single computing cluster or multiple computing machines, which can communicate through a communication connection. Therefore, the computing device 600 may be operated in a networking environment using a logical connection with one or more other servers, a network personal computer (PC), or another network node.

The input device 650 may be one or more input devices, such as a mouse, a keyboard, a trackball, etc. The output device 660 may be one or more output devices, such as a display, a speaker, a printer, etc. The computing device 600 may also communicate with one or more external devices (not shown) through the communication unit 640 as required. The external device, such as a storage device, a display device, etc., communicate with one or more devices that enable users to interact with the computing device 600, or communicate with any device (for example, a network card, a modem, etc.) that makes the computing device 600 communicate with one or more other computing devices. Such communication may be executed via an input/output (I/O) interface (not shown).

According to example implementation of the present disclosure, there is provided a computer-readable storage medium on which a computer-executable instruction or computer program is stored, wherein the computer-executable instructions are executed by a processor to implement the methods described above.

Various aspects of the present disclosure are described herein with reference to the flow chart and/or the block diagram of the method, the device, the apparatus, and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, special computers, or other programmable data processing devices to produce a machine that generates a device to implement the functions/acts specified in one or more blocks in the flow chart and/or the block diagram when these instructions are executed through the processing units of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions comprises a product, which comprises instructions operable to implement various aspects of the functions/acts specified in one or more blocks in the flowchart and/or the block diagram.

The computer-readable program instructions may be loaded onto a computer, other programmable data processing apparatus, or other devices, so that a series of operational steps can be performed on a computer, other programmable data processing apparatus, or other devices, to generate a computer-implemented process, such that the instructions which execute on a computer, other programmable data processing apparatus, or other devices are operable to implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a module, a program segment, or instructions, which includes one or more executable instructions for implementing the specified logic function. In some alternative implementations, the functions marked in the block may also occur in a different order from those marked in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description provides a number of examples, not exhaustive, and is not limited to the disclosed implementations. Without departing from the scope and spirit of the described implementations, many modifications and changes are obvious to ordinary skill in the art. The selection of terms used in this article aims to best explain the principles, practical application, or improvement of technology in the market of each implementation, or to enable others of ordinary skill in the art to understand the various embodiments disclosed herein.

## Claims

1. A method for eye tracking, comprising:
capturing a first image of an eye by a first camera;
capturing a second image of the eye by a second camera;
determining, based on information of an eye component in at least one of the first image and the second image, one of the first camera and the second camera as a main camera and the other one as an auxiliary camera; and
controlling the main camera to operate at a power higher than that of the auxiliary camera.

2. The method of claim 1, wherein controlling the main camera to operate at a power higher than that of the auxiliary camera comprises:
determining that the main camera outputs an image in a first mode, in the first mode, a size of the image output by the main camera is changed; and
determining that the auxiliary camera outputs an image in a second mode, in the second mode, a number of pixels of the image output by the auxiliary camera is reduced.

3. The method of claim 1, wherein determining one of the first camera and the second camera as the main camera comprises:
determine the main camera based on positions and/or sizes of the eye component in the first image and the second image.

4. The method of claim 3, wherein determining the main camera based on the positions and/or the sizes of the eye component in the first image and the second image comprises:
in response to determining that a position of the eye component in the first image is closer to a predetermined position than a position of the eye component in the second image, determining the first camera as the main camera; and/or
in response to determining that an area occupied by the eye component in the first image is greater than an area occupied by a pupil in the second image, determining the first camera as the main camera.

5. The method of claim 2, wherein the image output by the main camera is obtained by cropping an image captured by the main camera based on an area of interest.

6. The method of claim 5, further comprising:
determining, based on calibration information, the area of interest in the image captured by the main camera, the calibration information indicating a transformation relationship between an image coordinate of the auxiliary camera and an image coordinate of the main camera.

7. The method of claim 1, further comprising:
combining the image output by the main camera and the image output by the auxiliary camera; and
tracking the eye by using the combined images to obtain gaze point information.

8. An apparatus for eye tracking, comprising:
a first image capture module configured to capture a first image of an eye by a first camera;
a second image capture module configured to capture a second image of the eye by a second camera;
a switch module configured to determine, based on information of an eye component in at least one of the first image and the second image, one of the first camera and the second camera as the main camera and the other one as the auxiliary camera; and
a control module configured to control the main camera to operate at a power higher than that of the auxiliary camera.

9. An electronic device comprising:
at least one processing unit; and
at least one memory, the at least one memory being coupled to the at least one processing unit and storing instructions for executed by the at least one processing unit, the instructions, when executed by the at least one processing unit, causing the electronic device to perform the method of any one of claims 1 to 7.

10. A computer-readable storage medium having a computer program stored thereon, the computer program being executable by a processor to implement the method of any one of claims 1 to 7.
